# EUROPÄISCHE PATENTSCHRIFT

(11) **EP 0 743 228 B1**
(45) Veröffentlichungstag und Bekanntmachung des Hinweises auf die Patenterteilung: **15.09.1999**
(21) Anmeldenummer: 96105549.8
(22) Anmeldetag: 09.04.1996
(51) Int. Cl.: B60R 7/02

(54) **Vorrichtung zum variablen Unterteilen eines Kraftfahrzeug-Kofferraums und Festhalten des Ladegutes**
Device for variably dividing a vehicle boot into compartments, and for restraining the cargo
Dispositif pour compartimenter variablement le coffre d'un véhicule et pour maintenir le chargement

(30) Priorität: 19.05.1995 DE 19518432
(43) Veröffentlichungstag der Anmeldung: 20.11.1996
(73) Patentinhaber: fischerwerke Artur Fischer GmbH & Co. KG, 72178 Waldachtal (DE)
(72) Erfinder: Bieck, Torsten, 72178 Waldachtal (DE); Haage, Manfred, 72280 Dornstetten (DE); Erath, Herbert, 72178 Waldachtal (DE); Plocher, Bernd, 72108 Rottenburg-Seebronn (DE)

(56) Entgegenhaltungen:
- DE-A- 2 616 500
- DE-A- 3 048 826
- FR-A- 2 669 873
- FR-A- 2 716 655
- US-A- 5 035 184
- US-A- 5 161 700

## Beschreibung

Die Erfindung betrifft eine Vorrichtung zum variablen Unterteilen eines Kraftfahrzeug-Kofferraums und Festhalten des Ladegutes unter Verwendung von am Kofferraumboden angeordneten Führungsschienen und schwenkbaren Abstützplatten.

Je nach Verwendung des Kraftfahrzeuges ist das im Kofferraum mitzuführende Ladegut bezüglich der Anzahl der Einzelstücke sowie deren Formen und Größen stark unterschiedlich. Insbesondere im Alltagsgebrauch werden im Kofferraum oft nur kleinere Einzelstücke, wie beispielsweise Einkaufstaschen, Aktenkoffer etc. mitgeführt, welche nur einen Teil des Kofferraums beanspruchen. Solche ungesicherten Transportgüter neigen dazu, bei Beschleunigungen durch Anfahren, Bremsen oder Kurvenfahrten im Kofferraum hin- und herzurutschen oder gar umzukippen, was bei schweren bzw. empfindlichen Transportgütern leicht zu Beschädigungen am Ladegut oder auch am Kraftfahrzeug führen kann.

Auf dem Markt sind sogenannte "Antirutschmatten" erhältlich, welche auf dem Boden des Kofferraums ausgelegt werden und verhindern sollen, daß sich das Ladegut während der Fahrt verschieben kann. Solche Antirutschmatten sind jedoch nur für Ladegüter bestimmter Formen, Größen und Gewichte und nur bei relativ geringen Beschleunigungswerten wirksam. Auch kann mit diesen Antirutschmatten das Umkippen von Ladegütern nicht verhindert werden.

Aus der US-A-5 035 184 ist eine Vorrichtung zum variablen Unterteilen eines Kraftfahrzeug-Kofferraums bekannt. Die bekannte Vorrichtung weist zwei im Abstand zueinander am Kofferraumboden angeordnete Führungsschienen sowie eine zwischen den Führungsschienen angeordnete Abstützplatte auf, die in Längsrichtung der Führungsschienen verschiebbar in den Führungsschienen geführt ist. Die Abstützplatte ist drehbar gelagert und läßt sich von einer horizontalen, am Kofferraumboden aufliegenden Lage in eine abstützbare, senkrechte Lage schwenken. Durch Verschieben der Abstützplatte läßt sich der Kofferraum variabel unterteilen und dadurch an Ladegut anpassen. Wird der gesamte Kofferraum benötigt, läßt sich die Abstützplatte auf den Kofferraumboden schwenken und ist dadurch aus dem Weg. Von Nachteil ist, daß die Abstützplatte sich beim Verschieben schräg stellen kann und dadurch in den Führungsschienen verkantet, die Abstützplatte muß daher von Hand auf beiden Seiten gleichmäßig verschoben werden.

Der Erfindung liegt daher die Aufgabe zugrunde, eine Vorrichtung zum variablen Unterteilen eines Kraftfahrzeug-Kofferraums und Festhalten des Ladeguts zu schaffen, welche problemlos an jede beliebige Stelle der Führungsschienen verschiebbar ist.

Die Lösung dieser Aufgabe wird durch die im Anspruch 1 angegebenen Merkmale erreicht.

Die erfindungsgemäße Vorrichtung umfaßt zwei im Abstand zueinander am Kofferraumboden angeordneten Führungsschienen sowie wenigstens eine zwischen den Führungsschienen angeordnete Abstützplatte, welche mittels in beide Führungsschienen angeordneten und miteinander verbundenen Abrolleinrichtungen und einem in einer Führungsschiene geführten Führungsschlitten rechtwinklig zu den Führungsschienen verschiebbar ist. Durch die über eine Achse drehfest miteinander verbundenen und in beiden Führungsschienen geführten Abrolleinrichtungen wird unabhängig vom Angriff der Schiebekraft ein verkantfreies Verschieben der Abstützplatte ermöglicht. Die Abrolleinrichtung kann durch in den Führungsschienen laufenden Rollräder oder in einer bevorzugten Ausführungsform durch zwei über eine Achse drehfest miteinander verbundenen Zahnrädern gebildet sein, wobei jedes Zahnrad in eine Zahnreihe eines Zahnstangenprofils eingreift, das in beiden Führungsschienen eingesetzt ist. Über die Zahnräder und den Eingriff in ein Zahnstangenprofil werden beide Zahnräder gleichförmig bewegt und somit eine schlupffreie, ein Verkanten ausschließende Verschiebung der Abstützplatte zwischen den beiden Führungsschienen ermöglicht.

Die Achse der Abrolleinrichtung ist an der einen Seite am Führungsschlitten gelagert, der wiederrum über ein Schwenklager mit der Abstützplatte verbunden ist. An der anderen Seite ist die Achse in der Stirnseite der Abstützplatte gelagert. Über den in einer der beiden Führungsschienen geführten Führungsschlitten wird die Abstützplatte rechtwinklig zur Führungsschiene ausgerichtet. Ferner ist die Abstützplatte am Führungsschlitten schwenkbar gelagert und sowohl in eine am Kofferraumboden aufliegende als auch in eine aufgerichtete Lage zu bringen. In der aufgerichteten Position kann die Abstützplatte mittels eines am Führungsschlitten einhängbaren Arretierhebels abgestützt werden.

Die beiden Führungsschienen sind vorzugsweise am vorderen und hinteren Ende des Kofferraumbodens quer zur Fahrtrichtung des Kraftfahrzeuges befestigt und erstrecken sich im Wesentlichen über die gesamte Breite des Kofferraums, sodaß mehrere Abstützplatten verwendet werden können und eine Unterteilung an jeder Stelle des Kofferraumes möglich ist. Der Führungsschlitten ist vorzugsweise in der (in Fahrtrichtung) hinteren Führungsschiene angeordnet, da in der Regel zur Verschiebung der Abstützplatte an deren hinteren Ende gedrückt wird. Bei dieser Anordnung wird der Kofferraum in Fahrtrichtung unterteilt und durch Bildung einer zusätzlichen, verschiebbaren Seitenwand eine seitliche Fixierung des Ladeguts erreicht.

Eine Möglichkeit zum Feststellen der Abstützplatte bei einer durch Zahnräder gebildeten Abrolleinrichtung besteht darin, daß eines der beiden in den Führungsschienen eingesetzte Zahnstangenprofil eine der ersten Zahnreihe gegenüberliegende zweite Zahnreihe aufweist, in die das Zahnrad über einen Exzenterhebel einrastbar ist. Da nunmehr die beiden Zahnräder in unterschiedliche, sich gegenüberliegende Zahnreihen eingreifen, blockieren sie sich gegenseitig, sodaß eine Verschiebung der Abstützplatte nicht mehr möglich ist.

Das Einrasten des einen Zahnrades in die zweite Zahnreihe kann in der Weise erreicht werden, daß der Exzenterhebel schwenkbar am Führungsschlitten angeordnet ist und eine exzentrisch zu seiner Schwenkachse angeordnete Lagerbohrung für die Zahnradachse aufweist.

Das in den Führungsschienen eingesetzte Zahnstangenprofil kann ein aus Blech gestanztes U-Profil sein. Damit der Führungsschlitten in diesem Zahnstangenprofil verschiebbar ist, weist der Führungsschlitten einen in das Zahnstangenprofil passenden Querschnitt auf.

Schließlich können die Abstützplatten auf ihren Breitseiten mit Verbindungselementen, vorzugsweise Nuten für die Anbringung von zusätzlichen Befestigungseinrichtungen versehen sein. Die Befestigungseinrichtungen können beispielsweise Spannseile zur Sicherung des Ladegutes an der Abstützplatte oder Gurtmodule sein, welche mit den Verbindungselementen der Abstützplatten kraftschlüssig verbunden werden können und über einen Aufrollgurt miteinander verbunden sind. Mit solchen eine Aufrollmechanik aufweisendenden Gurtmodulen kann die Längsunterteilung des Kofferraums zusätzlich noch mit Querunterteilungen versehen werden. Die Gurtmodule können auch zum Festhalten des Ladegutes an einer liegenden Abstützplatte verwendet werden.

In der Zeichnung ist ein Ausführungsbeispiel der Erfindung dargestellt.
Es zeigen.
- Figur 1: die im Kraftfahrzeug-Kofferraum eingebaute Vorrichtung in perspektivischer Darstellung
- Figur 2: einen Detailausschnitt der Vorrichtung mit einer feststellbaren Abrolleinrichtung
- Figur 3: die Abrolleinrichtung beim Feststellvorgang.

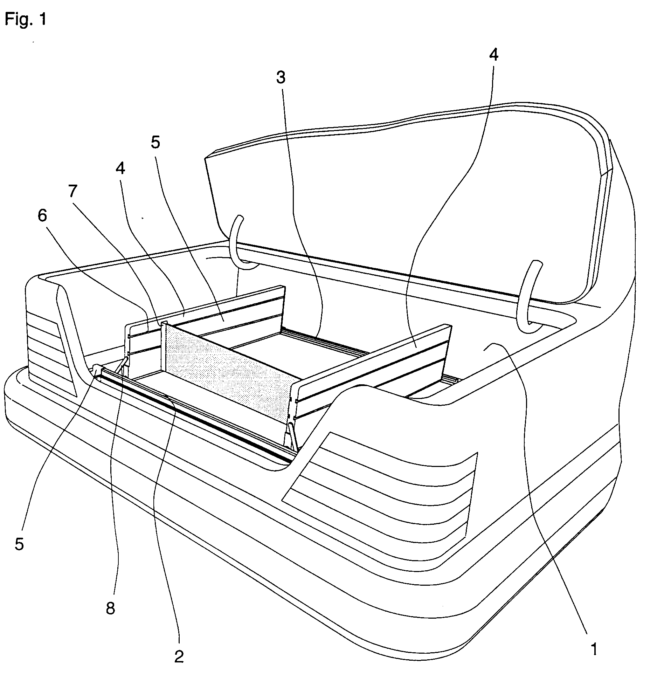

Figur 1 zeigt eine in einem Kraftfahrzeug-Kofferraum 1 eingebaute Vorrichtung zum variablen Unterteilen des Kofferraums und Festhalten des Ladegutes. Die Vorrichtung besteht aus zwei im Abstand zueinander am Kofferraumboden befestigten Führungsschienen 2, 3, zwischen denen die Abstützplatten 4 angeordnet sind. Beide Führungsschienen 2, 3 sind über Befestigungselemente 5 quer zur Fahrtrichtung des Fahrzeuges lösbar am Kofferraumboden befestigt. Damit ergibt sich durch die aufgerichteten Abstützplatten 4 eine Unterteilung des Kofferraums in mehrere kleinere, dem jeweiligen Ladegut angepassten Abschnitte.

Auf den Breitseiten 5 der Abstützplatten 4 sind in Form von Nuten ausgebildete Verbindungselemente 6 vorgesehen, an die verschiedene zusätzliche Befestigungseinrichtungen, beispielsweise Spannseile zur Sicherung des Ladegutes an der Abstützplatte oder Gurtmodule 7 mit Aufrollmechanik zum Verspannen oder weiteren Unterteilen angebracht werden können. Die Abstützplatten 4 können in Verbindung mit derartigen zusätzlichen Befestigungseinrichtungen sowohl in der liegenden Position als auch in der aufgerichteten Position zum Arretieren und Halten des Ladegutes genutzt werden. Die aufgerichtete Position der Abstützplatten 4 wird mit einem Arretierhebel 8 abgestützt.

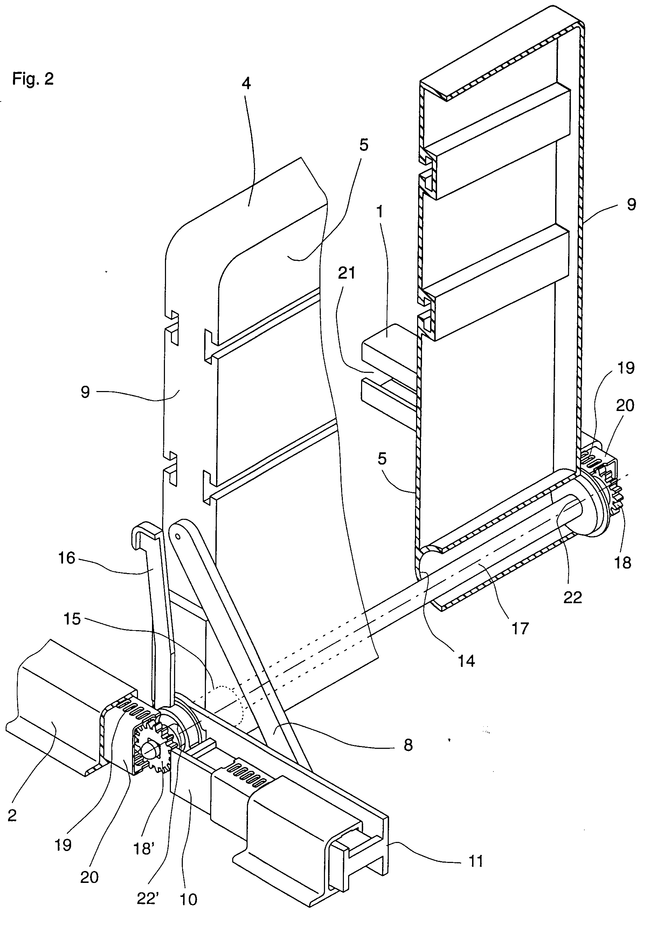

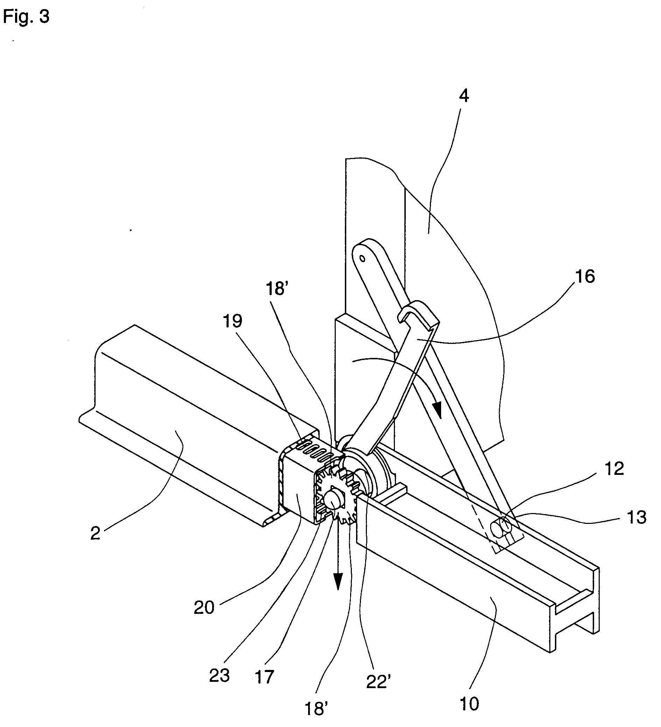

Figur 2 zeigt die Abdeckplatte 4 in einer vertikalen Position, die durch den schwenkbar an der Stirnseite 9 angeordneten Arretierhebel 8 am Führungsschlitten 10 abgestützt ist. Zu diesem Zweck befindet sich an der Außenfläche 11 des Führungsschlittens 10 ein Zapfen 12, in den das gabelförmige Ende 13 des Arretierhebels 8 eingerastet wird (siehe Figur 3). An dem Führungsschlitten 10 ist die Abdeckplatte 4 drehbar angelenkt und kann somit sowohl in die horizontale als auch in die dargestellte vertikale Lage verschwenkt werden.

Die beispielsweise aus den Breitseiten 5 aufweisenden Hälften zusammengesetzten Abstützplatten 4 weisen zur Aufnahme der Lagerbuchsen und zur Verstärkung einen Rohrbereich 14 auf, in dem die Lagerbuchse 15 (gestrichelt gezeichnet) des Führungsschlittens 10 eingesetzt ist. In dieser Lagerbuchse 15 ist ein Exzenterhebel 16 gelagert, der eine exzentrisch zur Schwenkachse des Hebels 16 angeordnete Lagerbohrung 22 für die Zahnradachse 17 aufweist. In der dargestellten oberen Stellung des Exzenterhebels 16 fluchtet die Lagerbohrung 22' für die Zahnradachse 17 des in der hinteren Führungsschiene 2 angeordneten Zahnrades 18' mit der Lagerbohrung 22 des in der vorderen Führungsschiene 1 angeordneten Zahnrades 18. Beide Zahnräder 18, 18' greifen in dieser Stellung in die obere Zahnreihe 19 des Zahnstangenprofils 20 ein. In dieser Stellung des Exzenterhebels 16 kann die Abstützplatte 4 entlang der Führungsschienen 1, 2 verschoben werden. Durch die über die Zahnradachse 17 drehfest miteinander verbundenen Zahnräder 18,18' rollen beide Zahnräder gleichmäßig ab und sorgen für eine gleichförmige verkantfreie Verschiebebewegung der Abstützplatte 4. Diese Verschiebung ist sowohl in vertikaler als auch horizontaler Lage der Abstützplatten möglich.

Die auf der gesamten Länge der Führungschienen 1, 2 eingesetzten Zahnstangenprofile 20 lassen somit eine die gesamte Länge der Führungsschiene ausnutzende Verschiebung zu. Die seitliche Führung und Stabilität der Abstützplatten 4 wird durch den Führungsschlitten 10 erreicht, der aufgrund seines in die Innenkontur des Zahnstangenprofils 20 passenden Querschnitts im Zahnstangenprofil 20 und damit in der Führungsschiene geführt wird. Die Verschiebung der Abstützplatte 4 mit Führungsschlitten 10 und den beiden auf der Zahnradachse 17 sitzenden Zahnräder 18, 18' wird durch einen nach innen weisenden Längsschlitz 21 in den beiden Führungsschienen 1 und 2 und dem U-förmigen Zahnstangenprofil 20 ermöglicht.

In Figur 3 wird der Exzenterhebel 16 nach unten gedrückt. Durch die exzentrisch zur Schwenkachse des Hebels angeordnete Lagerbohrung 22' für die Zahnradachse 17 wird das Zahnrad 18' aus dem Zahneingriff der oberen Zahnreihe 19 ausgerastet und in die untere Zahnreihe 23 des Zahnstangenprofils 20 eingerastet. Da der Zahneingriff des in der Führungsschiene 1 laufenden Zahnrads 18 in der oberen Zahnreihe 19 verbleibt, wird das Abrollen beider Zahnräder durch die drehfeste Verbindung über die Zahnradachse 17 blockiert. Damit kann die Abstützplatte 4 sowohl in aufrechter als auch in liegender Position festgestellt werden.

## Patentansprüche

1. Vorrichtung zum variablen Unterteilen eines Kraftfahrzeug-Kofferraums und Festhalten des Lagegutes, mit zwei im Abstand zueinander am Kofferraumboden angeordneten Führungsschienen (1, 2), sowie wenigstens einer zwischen den Führungsschienen (1, 2) angeordneten Abstützplatte (4), welche in Längsrichtung der Führungsschienen (1, 2) verschiebbar ist, wobei die Abstützplatte (4) drehbar an einem in einer Führungsschiene (2) geführten Führungsschlitten (10) gelagert ist und von einer horizontalen, am Kofferraumboden aufliegenden Lage in eine abstützbare, senkrechte Lage schwenkbar ist, **dadurch gekennzeichnet,** daß die Abstützplatte (4) mittels in beiden Führungsschienen (1, 2) angeordneten und miteinander verbundenen Abrolleinrichtungen (17, 18, 18') und dem in einer Führungsschiene (2) geführten Führungsschlitten (10) in Längsrichtung der Führungsschienen (1, 2) verschiebbar ist.

2. Vorrichtung nach Anspruch 1, dadurch gekennzeichnet, daß die Abrolleinrichtung durch zwei über eine Achse (17) drehfest miteinander verbundenen Zahnräder (18, 18') gebildet ist, wobei jedes Zahnrad in eine Zahnreihe (19) eines Zahnstangenprofils (20) eingreift, das in beiden Führungsschienen (1, 2) eingesetzt ist.

3. Vorrichtung nach Anspruch 2, dadurch gekennzeichnet, daß das vorzugsweise in der hinteren Führungsschiene (2) eingesetzte Zahnstangenprofil (20) eine der ersten Zahnreihe (19) gegenüberliegende zweite Zahnreihe (23) aufweist, in die das Zahnrad (18') über einen Exzenterhebel (16) einrastbar ist.

4. Vorrichtung nach Anspruch 3, dadurch gekennzeichnet, daß der Exzenterhebel (16) schwenkbar am Führungsschlitten (10) angeordnet und mit einer exzentrisch zur Schwenkachse des Hebels (16) angeordneten Lagerbohrung (22') für die Zahnradachse (17) versehen ist.

5. Vorrichtung nach Anspruch 1, dadurch gekennzeichnet, daß die Abstützplatte (4) in ihrer senkrechten Lage mittels eines Arretierhebels (8) abgestützt ist.

6. Vorrichtung nach Anspruch 1 und 2, dadurch gekennzeichnet, daß das in der Führungsschiene (1, 2) eingesetzte Zahnstangenprofil (20) ein aus Blech gestanztes U-Profil und der Führungsschlitten (10) einen in das Zahnstangenprofil (20) passenden Querschnitt aufweist.

7. Vorrichtung nach Anspruch 1, dadurch gekennzeichnet, daß die Abstützplatte (4) auf ihren Breitseiten (5) mit Verbindungselementen (6), vorzugsweise Nuten, für die Anbringung von zusätzlichen Befestigungseinrichtungen (7) versehen ist.

## Claims

1. Device for the variable division of a motor vehicle boot and for securing the loaded goods, having two guide rails (1, 2) arranged a distance apart on the boot floor, and also at least one support panel (4) arranged between the guide rails (1, 2), which support panel is displaceable in the longitudinal direction of the guide rails (1, 2), the support panel (4) being rotatably mounted on a sliding guide block (10) guided in one guide rail (2) and being pivotable from a horizontal position lying on the boot floor into a supportable vertical position, **characterised in that** the support panel (4) is displaceable in the longitudinal direction of the guide rails (1, 2) by means of rolling devices (17, 18, 18'), which are arranged in both guide rails (1, 2) and are joined to one another, and by means of the sliding guide block (10) guided in one guide rail (2).

2. Device according to claim 1, characterised in that the rolling device is formed by two toothed wheels (18, 18') joined to one another by means of an axle (17) so that they rotate together, each toothed wheel engaging in a series of teeth (19) of a profiled rack member (20) which is inserted in each of the guide rails (1, 2).

3. Device according to claim 2, characterised in that the profiled rack member (20) used preferably in the rear guide rail (2) has, opposite the first series of teeth (19), a second series of teeth (23) in which the toothed wheel (18') can be locked in place by means of an eccentric lever (16).

4. Device according to claim 3, characterised in that the eccentric lever (16) is pivotally arranged on the sliding guide block (10) and is provided with a bearing bore (22') for the toothed wheel axle (17) that is eccentric with respect to the pivoting axis of the lever (16).

5. Device according to claim 1, characterised in that the support panel (4) is supported in its vertical position by means of a locking arm (8).

6. Device according to claim 1 and 2, characterised in that the profiled rack member (20) inserted in the guide rails (1, 2) comprises a channel section stamped from sheet metal and the sliding guide block (10) has a cross-section fitting into the profiled rack member (20).

7. Device according to claim 1, characterised in that the support panel (4) is provided on its wide faces (5) with connecting elements (6), preferably grooves, for the attachment of additional fixing means (7).

## Revendications

1. Dispositif pour compartimenter de façon variable un coffre de véhicule à moteur et maintenir le chargement, comportant deux rails de guidage (1, 2) disposés à une certaine distance l'un de l'autre sur le plancher du coffre, ainsi qu'au moins un panneau d'appui (4) qui est disposé entre les rails de guidage (1, 2) et peut coulisser dans la direction longitudinale des rails de guidage (1, 2), dans lequel le panneau d'appui (4) est porté, avec liberté de rotation, sur un chariot de guidage (10) guidé dans un rail de guidage (2) et petit pivoter pour passer d'une position horizontale, reposant sur le plancher du véhicule, en une position verticale, dans laquelle il peut être soutenue, caractérise par le fait que l'on peut faire coulisser le panneau d'appui (4) selon la direction longitudinale des rails de guidage (1, 2) au moyen de dispositifs de roulement (17, 18, 18') disposés dans les deux rails de guidage (1, 2) et reliés l'un avec l'autre et du chariot de guidage (10) guidé dans un rail de guidage (2).

2. Dispositif selon la revendication 1, caractérisé par le fait que le dispositif de roulement est formé de deux roues dentées (18, 18') reliées l'une à l'autre sans liberté de rotation relative par l'intermédiaire d'une axe (17), chaque roue dentée engrenant dans une crémaillère (19) d'un profilé à crémaillère (20) qui est inséré dans chacun des deux rails de guidage (1, 2).

3. Dispositif selon la revendication 2, caractérisé par le fait que le profité à crémaillère (20), de préférence inséré dans le rail de guidage arrière (2), présente une seconde crémaillère (23) qui est située en face de la première crémaillère (19) et dans laquelle la roue dentée (18') peut se cranter au moyen d'un levier excentrique (16).

4. Dispositif selon la revendication 3, caractérisé par le fait que le levier excentrique (16) est disposé sur le rail de guidage (10) avec liberté de pivotement et présente pour l'axe (17) des roues dentées un alésage (22') disposé excentriquement par rapport à l'axe de pivotement du levier (16).

5. Dispositif selon la revendication 1, caractérisé par le fait que le panneau d'appui (4) est soutenu en position verticale au moyen d'un levier de blocage (8).

6. Dispositif selon les revendications 1 et 2, caractérisé par le fait que le profilé à crémaillère (20) est inséré dans le rail de guidage (1, 2), présente un profil en U estampé en tôle et que le chariot de guidage (10) présente une section adaptée au profilé à crémaillère (20).

7. Dispositif selon la revendication 1, caractérisé par le fait que, sur ses grands côtés (5), le panneau d'appui (4) peut comporter des éléments de liaison (6), de préférence des rainures, pour application de dispositifs de fixation supplémentaires (7).
